# EUROPÄISCHE PATENTANMELDUNG

(11) **EP 4 279 167 A1**
(43) Veröffentlichungstag der Anmeldung: **22.11.2023**
(21) Anmeldenummer: 23171229.0
(22) Anmeldetag: 03.05.2023
(51) Int. Cl.: B01D 61/58, B01D 61/00, C02F 1/44, C05F 3/00

(54) **VORRICHTUNG ZUR AUFBEREITUNG EINER LÖSUNG SOWIE ENTSPRECHENDES VERFAHREN**

(30) Priorität: 20.05.2022 DE 102022112764
(71) Anmelder: MionTec GmbH, 51377 Leverkusen (DE)
(72) Erfinder: Alt, Joachim, 51377 Leverkusen (DE); Greisner, Bastian, 51377 Leverkusen (DE)
(74) Vertreter: Erbacher, Martin

(57) **Zusammenfassung**

Die Erfindung betrifft eine Vorrichtung zur Aufbereitung einer Lösung, welche Wasser, Mikroorganismen und organisches und/oder anorganisches Salz aufweist, mit einer Sterilfiltrationsstufe, welche dazu eingerichtet ist, Mikroorganismen aus einer Lösung abzuscheiden, welche Wasser, die Mikroorganismen und organisches und/oder anorganisches Salz aufweist, und dadurch ein Sterilfiltrat zu erzeugen, und mit einer Vorwärtsosmose-Stufe, welche dazu eingerichtet ist, Wasser aus dem Sterilfiltrat abzuscheiden und dadurch ein Sterilfiltratkonzentrat zu erzeugen. Die Erfindung betrifft ferner ein entsprechendes Verfahren sowie ein entsprechendes Sterilfiltratkonzentrat. Die Erfindung betrifft ferner ein entsprechendes Verfahren.

## Beschreibung

Die vorliegende Erfindung betrifft eine Vorrichtung und ein Verfahren zur Behandlung einer Lösung, welche Wasser, Mikroorganismen und organisches und/oder anorganisches Salz aufweist. Die Lösung kann beispielsweise Gülle sein.

Ein bestehendes Problem der landwirtschaftlichen Tierhaltung ist der Umgang mit tierischen Abfällen wie Gülle. Während in einigen Gebieten eine Nachfrage an Gülle als Wirtschaftsdünger für landwirtschaftlichen Nutzflächen besteht, produzieren Betriebe in anderen Gebieten ein Überangebot an Gülle. Das hat zufolge, dass die Gülle von Gebieten mit Überangebot zu Gebieten mit erhöhter Nachfrage transportiert werden muss.

Gemäß dem Stand der Technik wird, um das Güllevolumen für den Transport zu reduzieren, in einem ersten Schritt der Feststoff aus der Rohgülle entfernt. Dazu werden gängige Fest/Flüssig-Separatoren wie Bandeindicker, Schneckeneindicker und Eindickzentrifugen verwendet. Die Feststoffe können anschließend kompostiert und als Feststoffdünger - zum Beispiel in Form von Pellets - eingesetzt werden.

Die von Feststoffen befreite Gülle (Flüssiggülle) beinhaltet einen Großteil an gelösten Stoffen, die sich besonders als Wirtschaftsdünger für weitere Verarbeitung eignen. Zusätzlich beinhaltet die Flüssiggülle einen Anteil an Mikroorganismen, die die chemische Zusammensetzung der Flüssiggülle mit der Zeit verändern und für die Entstehung von Treibhausgasen sorgen. Aus Kostengründen sollte die Konzentration der Flüssiggülle möglichst hoch sein, damit das Transportvolumen für eine definierte Menge an Wirtschaftsdünger möglichst niedrig ist. Aus kosten- und umweltschutztechnischen Gründen sollte ferner die Konzentration an Mikroorganismen möglichst gering sein, um die Entstehung von Treibhausgasen zu minimieren.

In Gebieten mit besonders hoher Gülleproduktion wird die Gülle durch biologische Kläranlagen in eine Fraktion aus Wasser und eine Fraktion aus biologisch verarbeitetem Feststoff geteilt, der als Feststoffdünger eingesetzt werden kann. Die dafür benötigte Technik ist äußerst platz- und kostenintensiv.

Es ist die Aufgabe der vorliegenden Erfindung, eine Vorrichtung bzw. ein Verfahren zur Aufbereitung einer Wasser, Mikroorganismen und organisches und/oder anorganisches Salz aufweisenden Lösung bereitzustellen, das Nachteile des Stands der Technik überwindet, insbesondere ein entsprechendes Verfahren bereitzustellen, das gegenüber Verfahren des Stands der Technik einen höheren Umweltschutz ermöglicht, geringerer Kosten bedarf und zusätzliche, bisher ungenutzte Wertstoffquellen aufdeckt.

Die Aufgabe wird gelöst mit den Merkmalen der unabhängigen Ansprüche. Vorteilhafte Ausgestaltungen werden in den abhängigen Ansprüchen beschrieben.

Demgemäß ist eine Vorrichtung zur Aufbereitung einer Lösung, welche Wasser, Mikroorganismen und organisches und/oder anorganisches Salz aufweist, vorgesehen, mit einer Sterilfiltrationsstufe, welche dazu eingerichtet ist, Mikroorganismen aus einer Lösung abzuscheiden, welche Wasser, die Mikroorganismen und organisches und/oder anorganisches Salz aufweist, und dadurch ein Sterilfiltrat zu erzeugen, und mit einer Vorwärtsosmose-Stufe, welche dazu eingerichtet ist, Wasser aus dem Sterilfiltrat abzuscheiden und dadurch ein Sterilfiltratkonzentrat zu erzeugen. Neben dem Abscheiden von Mikroorganismen kann ferner ein Abscheiden von Feststoffen aus der Lösung bzw. der Gülle vorgesehen sein.

Die erfindungsgemäße Vorrichtung beziehungsweise das erfindungsgemäße Verfahren erlaubt es, eine gemäß dem Stand der Technik unzureichende Trennung der Biofoulingverursachenden Mikroorganismen aus der Flüssiggülle mittels Sterilfiltration und einer Trennung von Scaling-verursachenden Komponenten durch eine Vorwärtsosmose zu nutzen, um eine Entwässerung der Flüssiggülle zu erzielen. Durch ein nachfolgendes druckgetriebenes oder temperaturgetriebenes Membranverfahren, etwa Umkehrosmose oder Membrandestillation, wird der osmotische Druck zwei wieder erhöht. Auf diese Weise kann die Aufkonzentrierung der Flüssiggülle mit dem osmotischen Druck eins über das für den Stand der Technik bekannte Maß hinaus betrieben werden.

Es kann vorgesehen sein, dass die Lösung Gülle, Gärstoffe oder einer Mischung von beidem aufweist.

Darüber hinaus ist es denkbar, dass die Vorrichtung ferner eine zusätzliche Trennstufe, beispielweise eine Nanofiltrationsstufe, aufweist, welche dazu eingerichtet ist, eine weitere Auftrennung des Sterilfiltrats in seine Komponenten zu bewirken. Die Trennstufe kann zwischen der Sterilfiltrationsstufe und der Vorwärtsosmose-Stufe oder dem Behälter angeordnet sein.

Ferner kann die Vorrichtung einen Behälter aufweisen, welcher zumindest über einen Zulauf und zumindest über einen Ablauf mit der Vorwärtsosmose-Stufe verbunden ist, so dass das Vorwärtsosmose-Retentat in den Behälter zurückführbar und durch mehrmaliges Durchlaufen der Vorwärtsosmose aufkonzentrierbar ist. Der Behälter kann einen Zulauf für das Sterilfiltrat aufweisen, durch welchen das Sterilfiltrat vor Erreichen der Vorwärtsosmose-Stufe in den Behälter führbar ist, so dass das Sterilfiltrat im Behälter mit dem rückgeführten Vorwärtsosmose-Retentat mischbar ist. Der Behälter kann ferner einen Ablauf aufweisen, durch welchen das Sterilfiltrationskonzentrat vom Behälter aus dem Prozess ausleitbar ist.

Ferner kann vorgesehen sein, dass die Vorwärtsosmose-Stufe einen umittelbar mit der Sterilfiltrationsstufe oder der zusätzlichen Trennstufe verbundenen Sterilfiltratzulauf und einen Sterilfiltratkonzentratablauf aufweist, so dass das Vorwärtsosmose-Retentat nach einem einmaligen Durchlaufen der Vorwärtsosmose-Stufe aus dem Prozess geführt ist, so dass das Vorwärtsosmose-Retentat dem Sterilfiltratkonzentrat entspricht.

Die erste Behandlung der Rohgülle kann durch eine Feststoffseparation mittels gängiger Methoden wie Bandeindicker, Schneckeneindicker und Eindickzentrifugen erfolgen und bewirkt die Abscheidung von groben Feststoffen aus der Gülle, um die Standzeit der nachfolgenden Membranverfahren zu verlängern. Bei der Feststoffseparation kann vorgesehen sein, dass diese keine Auswirkung auf die chemische Zusammensetzung der flüssigen Phase (Flüssiggülle) hat. Die Feststoffe können dann durch die Sterilfiltration abgetrennt werden.

Der Feststoff, der durch die Feststoffseparation abgetrennt wird, kann mittlere bis hohe Anteile an Rohmasse, Trockensubstanz, Gesamtstickstoff, Ammonium, Phosphor, Kalium, Magnesium, Calcium, Gesamtschwefel und Mikroorganismen aufweisen.

Der Feststoff kann insbesondere geeignet sein:
- zur Verwendung als Substrat in Biogasanlagen;
- zur direkten Ausbringung auf landwirtschaftliche Nutzflächen;
- zur weiteren Verarbeitung mittels Trocken- oder Vakuumverdampfung;
- zur Pelletierung; und
- zur Kompostierung.

Die erfindungsgemäße Lösung bzw. die Flüssiggülle kann der von groben bis hin zu kleinen Feststoffen befreite Anteil von Rohgülle sein, welcher durch die Verarbeitung mittels Feststoffseparator entsteht und mittlere bis hohe Anteile an Gesamtstickstoff, Phosphor, Ammonium, Kalium, Magnesium, Calcium, Gesamtschwefel und Mikroorganismen und geringe bis sehr geringe Mengen an Rohmasse und Trockensubstanz aufweisen kann.

Die Sterilfiltration ist ein der Ultrafiltration zuzuordnender verfahrenstechnischer Prozess, bei dem die Flüssiggülle entlang einer Membrane mit einer Porengröße kleiner oder gleich der Sterilfiltrationsgrenze von 0,22 µm geführt werden kann. Dadurch werden Mikroorganismen und restliche Feststoffe zurückgehalten und es entsteht ein steriles Filtrat (Sterilfiltrat) sowie ein Konzentrat der Flüssiggülle. Demgemäß kann vorgesehen sein, dass die Sterilfiltrationsstufe eine Porenweite von weniger als 0,4 µm, bevorzugt, weniger als 0,3 µm, besonders bevorzugt weniger als 0,2 µm aufweist. Insbesondere kann vorgesehen sein, dass die Sterilfiltrationsstufe dazu eingerichtet ist, dass diese keinen Anti-Scalant-Effekt aufweist, so dass die Sterilfiltration Partikeln und Mikroorganismen entfernt, die Zusammensetzung von gelösten Stoffen wie Salzen jedoch nicht beeinflusst wird. Weiterhin kann vorgesehen sein, dass die für die Sterilfiltration eingesetzte Membran porös ist. Demgegenüber sind Membranen zur Enthärtung, d. h., mit Anti-Scalant-Effekt, dicht. Dabei ist das zugrundeliegende Prinzip des Stofftransports von porösen und dichten Membranen gänzlich unterschiedlich (konvektiver vs. diffusiver Stofftransport). Für das erfindungsgemäße Verfahren ist es wesentlich, dass innerhalb der Sterilfiltrationsstufe keine Enthärtung erfolgt, da sich die Zusammensetzung des Sterilfiltratkonzentrats dadurch entscheidend ändern würde, sodass der wirtschaftliche Wert des Produkts gemindert wäre. Der Wert des Produktes entsteht durch die Entwässerung bei gleichzeitiger Hygienisierung.

Es kann vorgesehen sein, dass die Sterilfiltrationsstufe eine keramische Filtrationsmembran aufweist, durch welche die Lösung gepumpt wird. Die Membran kann dazu eingerichtet sein, Bakterien, Pilze, Viren und Partikel aus der Lösung zu filtern. Weiterhin kann die Membran dazu eingerichtet sein, nur Wasser (bzw. Lösungsmittel) und gelöste Stoffe durchzulassen. Die Membran kann dabei als Rotationsscheibe oder als Rohrmembran vorliegen. Als Materialien der Membran können Aluminiumoxid, Titandioxid und/oder Siliciumcarbid vorgesehen sein.

Mikroorganismen in der Lösung können Fouling an nachfolgenden Membranprozessen verursachen. Daher ist es von Vorteil, wie erfindungsgemäß vorgesehen, diese mittels der Sterilfiltration zuvor herauszufiltern, um dadurch die Standzeit der nachfolgenden Membranprozesse zu erhöhen. Die Sterilfiltration funktioniert mittels eines Konvektionsmechanismus, bei welchem ein einstellbarer hydrostatischer bzw. hydrodynamischer Druck die Lösung durch die Poren der Membran drückt. Der Vorteil beim konvektiven Stofftransport besteht darin, dass ein schnnellerer Transport von Stoffen im Vergleich zu dichten Membranen erfolgt. Eine "dichte" Membran im Sinne dieser Anmeldung betrifft Membranen mit Poren, welche Durchmesser von etwa kleiner gleich 0,0001 µm aufweisen. Aufgrund dieser kleinen Porengröße bleibt der Stofftransport allerdings diffusiver Natur.

Das Konzentrat der Flüssiggülle kann mittlere bis hohe Anteile an Gesamtstickstoff, Phosphor, Ammonium, Kalium, Magnesium, Calcium und Gesamtschwefel und sehr hohe Anteile an Rohmasse, Trockensubstanz und Mikroorganismen aufweisen.

Das Konzentrat der Flüssiggülle ist insbesondere geeignet zur Impfung von Biogasanlagen mit methanogenen Bakterien. Hier bietet sich die Möglichkeit, diese methanogenen Bakterien aus der freien Umwelt in geschlossene Methan-erzeugende Anlagen zu transferieren, was aktuellen energie- und umweltpolitischen Zielen entspricht.

Das Sterilfiltrat kann mittlere bis hohe Anteile an Gesamtstickstoff, Phosphor, Ammonium, Kalium, Magnesium, Calcium und Gesamtschwefel und keine bis sehr geringe Anteile an Rohmasse, Trockensubstanz und Mikroorgansimen aufweisen.

Es kann vorgesehen sein, dass die Vorrichtung ferner eine Aufbereitungsstufe aufweist, welche dazu eingerichtet ist, eine für die Vorwärtsosmose verwendete und im Zuge der Vorwärtsosmose verdünnte Zuglösung mittels zumindest einem druckgetriebenen Membranprozess aufzubereiten. Alternativ kann vorgesehen sein, dass die Vorrichtung eine Aufbereitungsstufe aufweist, welche dazu eingerichtet ist, eine für die Vorwärtsosmose verwendete und im Zuge der Vorwärtsosmose verdünnte Zuglösung mittels zumindest einem temperaturgetriebenen Membranprozess aufzubereiten. Die Vorwärtsosmose-Stufe kann über zumindest einen Zulauf und über zumindest einen Ablauf mit der Aufbereitungsstufe verbunden sein. Der Zulauf kann die Zuglösung von der Aufbereitungsstufe zur Vorwärtsosmose-Stufe leiten. Der Ablauf kann dann die in der Vorwärtsosmose-Stufe mit Wasser verdünnte Zuglösung von der Vorwärtsosmose-Stufe zur Aufbereitungsstufe leiten. Der Zulauf kann die Zuglösung von der Aufbereitungsstufe zur Vorwärtsosmose-Stufe leiten. Die Zuglösung kann einen höheren osmotischen Druck aufweisen als das Sterilfiltrat.

Die Osmose (Vorwärtsosmose) bezeichnet die Diffusion von Lösungsmittelmolekülen (beispielsweise Wasser) durch eine semipermeable Membran (Vorwärtsosmosemembran), wobei die Triebkraft für diesen Prozess durch die osmotische Druckdifferenz zweier durch die Membran getrennter Lösungen erzeugt wird. Der Stofftransport des Lösungsmittels geschieht entlang des osmotischen Druckgradienten, folglich von der Lösung mit niedrigem osmotischem Druck hin zur Lösung mit hohem osmotischem Druck (Zuglösung). Die zu verwendenden Vorwärtsosmosemembranen sollten sowohl gegenüber dem Sterilfiltrat als auch dem konzentrierten Sterilfiltrat chemisch beständig sein.

Der osmotische Druck ist eine kolligative Eigenschaft und eine thermodynamische Größe, die das Potenzial einer Lösung beschreibt, Lösungsmittel, beispielsweise durch Diffusion durch eine Vorwärtsosmosemembran, gegen einen hydraulischen Druck aufzunehmen, bis sich osmotischer und hydraulischer Druck ausgleichen. Der osmotische Druck ist von der Konzentration der gelösten Moleküle und der Temperatur abhängig.

Die Zuglösung ist eine Lösung mit einem hohen osmotischen Druck, die das durch die Diffusion der Vorwärtsosmose erhaltene Lösungsmittel aufnimmt. Dadurch wird die Zuglösung verdünnt und der osmotische Druck verringert.

Es kann vorgesehen sein, dass die Zuglösung aus einem wässrigen Lösungsmittel mit gelösten volatilen, gasförmigen, organischen, anorganischen Komponenten, Nanopartikeln oder einer Mischung von zwei oder mehr davon besteht.

Es kann insbesondere vorgesehen sein, dass die Zuglösung aus einem wässrigen Lösungsmittel besteht, dessen gelöste Bestandteile zum Teil oder gänzlich einem System oder Teilsystem der Vorwärtsosmose, beispielsweise des Sterilfiltrats, entstammen.

Das Vorwärtsosmose-Konzentrat entsteht durch die Entwässerung der Vorwärtsosmose und kann sehr hohe Anteile an Gesamtstickstoff, Phosphor, Ammonium, Kalium, Magnesium, Calcium und Gesamtschwefel und keine bis sehr geringe Mengen an Rohmasse, Trockensubstanz und Mikroorganismen aufweisen.

Das Sterilfiltrat-Konzentrat, das auch dem Vorwärtsosmose-Konzentrat entsprechen kann, bietet den Vorteil, dass durch die hohen Konzentrationen von gelösten Molekülen ein hoher osmotischer Druck eingestellt wird, der für die restlich verbliebenen Mikroorganismen eine lebensfeindliche Umgebung darstellt.

Das Sterilfiltrat-Konzentrat kann insbesondere zur Nutzung als Spezialdünger und Düngerkonzentrat oder zur Gewinnung
- von Ammoniumsulfat mittels Ammoniak-Strippung;
- von Ammoniak für die Wasserstoffproduktion; und
- von Phosphor, Schwefel, Magnesium und Calcium mittels Fällung und Flockung geeignet sein.

Für einen kontinuierlichen Prozess bedarf es einer Rekonzentrierung der Zuglösung auf ihre anfängliche Konzentration. Dazu können ein druck- und/oder temperaturgetriebener Membranprozess verwendet werden. Die verwendeten Membranprozessschritte zur Rekonzentrierung der Zuglösung können kombiniert werden, um die gewünschte Leistung zu erzielen.

Druckgetriebene Membranprozesse sind dadurch gekennzeichnet, dass die für den Stofftransport (Diffusion) durch eine semipermeable Membran benötigte Triebkraft durch das primäre Einstellen eines hydraulischen Drucks bereitgestellt wird. Dazu zählen Verfahren wie die Umkehrosmose, Nanofiltration und Ultrafiltration, welche in der Aufbereitungsstufe Anwendung finden können. Dabei geschieht der Stofftransport gegen den Druckgradienten.

Temperaturgetriebene Membranprozesse sind dadurch gekennzeichnet, dass die für den Stofftransport (Diffusion) durch eine semipermeable Membran benötigte Triebkraft durch das primäre Einstellen einer Temperatur bereitgestellt wird. Dazu zählen Verfahren wie die Membrandestillation und Membranosmose, welche ebenfalls in der Aufbereitungsstufe Anwendung finden können.

Das Permeat ist das Lösungsmittel (Wasser), welches durch die Membran (beispielsweise der Umkehrosmose) diffundiert. Es kann aufgrund des starken Rückhalts der Membran gegenüber dem Lösungsmittel andersartige Komponenten eine hohe Reinheit aufweisen. Das Permeat kann keine bis sehr geringe Mengen an Gesamtstickstoff, Phosphor, Ammonium, Kalium, Magnesium, Calcium und Gesamtschwefel und keine Anteile an Rohmasse, Trockensubstanz und Mikroorgansimen aufweisen.

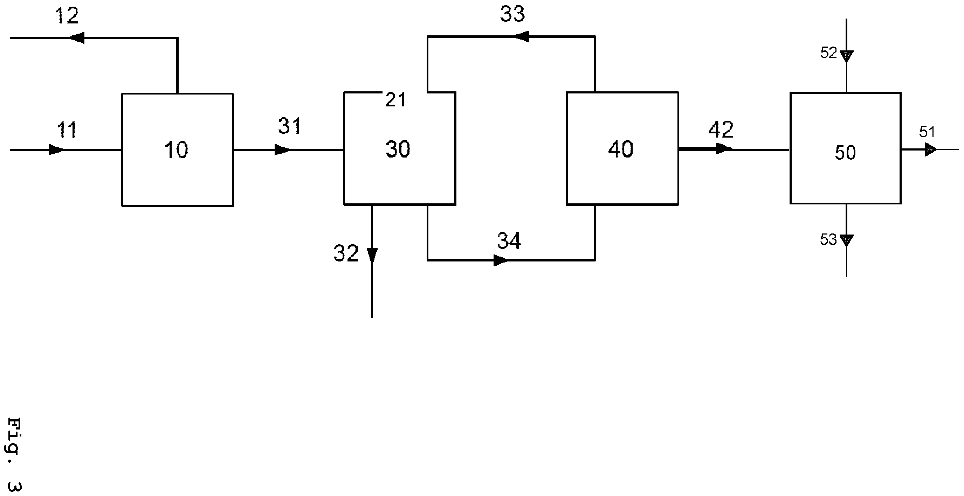

Es kann weiterhin vorgesehen sein, dass die Vorrichtung eine weitere Behandlungsstufe zum Behandeln des Permeats aufweist, welche mindestens einen Ionenaustauscher aufweist (Fig. 3.). Der Ionenaustauscher kann dazu eingerichtet sein, restliche etwaige Komponenten, die im produzierten Wasser unerwünscht sein könnten (beispielsweise Ammonium), zu entfernen. Dadurch lässt sich eine besonders hohe Reinheit erzielen.

Ionenaustauscher sind Materialien, mit denen gelöste Ionen durch andere Ionen gleicher Ladung (d. h. positiv oder negativ) ersetzt werden können. Der Ionenaustauscher kann als mit einem Ionenaustauschermaterial gefüllte Säulen oder als Membran ausgebildet sein, welche von der zu behandelnden Lösung durchströmt werden. Die auszutauschenden Ionen werden am Ionenaustauschermaterial gebunden, das seinerseits dafür eine äquivalente Stoffmenge von vorher gebundenen Ionen in die Lösung abgibt.

Je nachdem welche Art von Ionen ausgetauscht werden soll, kann der Ionenaustauscher einen Kationenaustauscher und/oder einen Anionenaustauscher aufweisen. Im Fall eines Kationenaustauschers ist die aktive Gruppe eine anionische Gruppe, wie beispielsweise Sulfonsäure oder Carboxylgruppen, mit abdissoziierbarem Kation. Man unterscheidet schwach saure Kationenaustauscher (etwa Carboxylgruppen) und stark saure (etwa Sulfonsäuregruppen).

Anionenaustauscher enthalten stark basische Gruppen, etwa quartäre Ammoniumgruppen als aktive Gruppen, die ihr Gegenion austauschen können. Es kann vorgesehen sein, dass der Anionenaustauscher als Typ I oder als Typ II ausgebildet ist. Die Unterscheidung der beiden Typen I und II bezieht sich auf die Eigenschaften für thermische Beständigkeit und Austauschkapazität. Ein Typ I-Anionenaustauscher ist thermisch stabiler, hat aber eine geringere Austauschkapazität als ein Typ II-Austauscher. Die austauschaktive Gruppe des Typ I-Austauschers ist beispielsweise eine Trialkylammonium-Gruppe (-N+(CR₃)₃). Beim Typ II ist beispielsweise mindestens eine der drei Alkylgruppen durch eine Hydroxyalkylgruppe ersetzt.

Schwach basische Austauscher können Aminogruppen enthalten, an die die Anionen freier Säuren angelagert werden. Die Säureanionen sind reversibel gebunden. Mit Laugen werden bei der Regeneration die freien Aminogruppen wieder zurückgebildet. Abhängig vom Typ der Aminogruppe - primäre (-NH2), sekundäre (-NHR) oder tertiäre Aminogruppe (-NR₂) - ist die Basizität der Austauscher leicht unterschiedlich.

Es kann vorgesehen sein, dass das Regeneriermittel eine wässrige Säure, eine wässrige Lauge, eine wässrige Salzlösung oder eine Mischung von zwei oder mehr davon ist.

Es kann insbesondere vorgesehen sein, dass die wässrige Säure wässrige Salzsäure oder wässrige Schwefelsäure ist; die wässrige Lauge wässrige Natronlauge, wässrige Kalilauge oder eine wässrige Ammoniaklösung ist; und die wässrige Salzlösung eine wässrige Natriumchloridlösung, eine wässrige Natriumsulfatlösung oder eine wässrige Magnesiumchloridlösung ist.

Das Regenerat des Ionenaustauschers kann die aus dem Permeat entfernten Komponenten in hochkonzentrierter Form enthalten.

Es kann vorgesehen sein, dass das Regenerat des Ionenaustauschers als Zuglösung oder Zuglösungszusatz eingesetzt wird.

Es kann insbesondere vorgesehen sein, dass das Regenerat als Wertstoff weiterverarbeitet wird.

Der Ablauf des Ionenaustauschers (Wasser) kann keine bis sehr geringe Mengen an Gesamtstickstoff, Phosphor, Ammonium, Kalium, Magnesium, Calcium und Gesamtschwefel und keine Anteile an Rohmasse, Trockensubstanz und Mikroorgansimen aufweisen.

Die Erfindung betrifft ferner ein Verfahren zur Aufbereitung einer Lösung, welche Wasser, Mikroorganismen und organisches und/oder anorganisches Salz aufweist, mit den Schritten:
Erzeugen eines Sterilfiltrats aus einer Wasser, Mikroorganismen und organisches und/oder anorganisches Salz aufweisenden Lösung, wobei zur Erzeugung des Sterilfiltrats die Mikroorganismen mittels Sterilfiltration aus der Lösung abgeschieden werden;
Erzeugen eines Sterilfiltratkonzentrats aus dem Sterilfiltrat mittels Vorwärtsosmose, wobei bei der Vorwärtsosmose Wasser aus der Lösung abgeschieden werden.

Dabei kann die Lösung Gülle, Gärstoffe oder einer Mischung von beidem aufweisen.

Das Verfahren kann ferner das Aufbereiten einer für die Vorwärtsosmose verwendeten und im Zuge der Vorwärtsosmose verdünnten Zuglösung mittels zumindest einem druckgetriebenen Membranprozess aufweisen.

Das Verfahren kann alternativ das Aufbereiten einer für die Vorwärtsosmose verwendeten und im Zuge der Vorwärtsosmose verdünnten Zuglösung mittels zumindest einem temperaturgetriebenen Membranprozess aufweisen.

Das Verfahren kann ferner das Nachbehandeln eines Permeats, welches von zumindest einem druckgetriebenen oder temperaturgetriebenen Membranprozess oder einer Kombination von beidem stammen kann, mittels zumindest eines Ionenaustauschers umfassen.

Es ist denkbar, dass die gelösten Bestandteile in der verdünnten Zuglösung zum Teil oder gänzlich einem System oder Teilsystem der Vorwärtsosmose, beispielsweise dem Sterilfiltrat, entstammen.

Es insbesondere denkbar, dass die gelösten Bestandteile in der verdünnten Zuglösung zum Teil oder gänzlich einem System oder Teilsystem des Ionenaustauschers, beispielsweise dem Regenerat, entstammen.

Das Verfahren kann ferner das Behandeln des Sterilfiltrats mit einer zusätzlichen Trennstufe aufweisen, beispielsweise einer Nanofiltration, um eine weitere Auftrennung des Sterilfiltrats in seine Komponenten zu bewirken.

Es kann vorgesehen sein, dass das Vorwärtsosmose-Retentat in einen Behälter zurückgeführt und durch mehrmaliges Durchlaufen der Vorwärtsosmose aufkonzentriert wird. Dabei kann das Sterilfiltrat vor Erreichen der Vorwärtsosmose durch den Behälter geführt werden, in welchem das rückgeführte Vorwärtsosmose-Retentat mit dem Sterilfiltrat gemischt wird.

Es kann vorgesehen sein, dass das Sterilfiltrationskonzentrat vom Behälter aus dem Prozess ausgeleitet wird.

Das Vorwärtsosmose-Retentat kann nach einem einmaligen Durchlaufen der Vorwärtsosmose aus dem Prozess geführt werden, so dass in diesem Fall das Vorwärtsosmose-Retentat dem Sterilfiltratkonzentrat entsprechen kann.

Es kann vorgesehen sein, dass beim Aufbereiten der Zuglösung ein Permeat abgeschieden wird, welches eine Wasserqualität aufweist, welche zur Bewässerung von landwirtschaftlichen Nutzflächen verwendet werden kann.

Es kann insbesondere vorgesehen sein, dass beim Nachbehandeln des Permeats ein Ablauf erzeugt wird, welches eine Wasserqualität aufweist, welche zur Bewässerung von landwirtschaftlichen Nutzflächen verwendet werden kann.

Darüber hinaus kann vorgesehen sein, dass beim Aufbereiten der Zuglösung ein Permeat abgeschieden wird, welches eine Wasserqualität aufweist, welche zur Tränkung von landwirtschaftlichen Nutztieren verwendet werden kann.

Es kann insbesondere vorgesehen sein, dass beim Nachbehandeln des Permeats ein Ablauf erzeugt wird, welches eine Wasserqualität aufweist, welche zur Tränkung von landwirtschaftlichen Nutztieren verwendet werden kann.

Das Verfahren ist demnach besonders geeignet:
- um einen Feststoff-Dünger herzustellen;
- um eine hochkonzentrierte Impflösung mit methanogenen Bakterien für Biogasanlagen herzustellen;
- um einen Flüssigdünger herzustellen, der aufgrund der hohen Konzentration weniger Frachtvolumen benötigt;
- um eine sterile Prozesslösung herzustellen, die zur weiteren Wertstoffgewinnung verwendet werden kann; und
- um Wasser zur Bewässerung von Nutzflächen oder Tränkung von Nutztieren zu gewinnen.

Durch das neue Verfahren können Verfahren nach dem Stand der Technik wie Bandeindicker, Schneckeneindicker und Eindickzentrifugen ersetzt oder erweitert werden. Neben der Verringerung der Transportkosten von Flüssiggülle bietet das der Erfindung zugrunde liegende Verfahren vor allem den Vorteil, dass aus der Rohgülle nutzbare Wertstoffströme abgeleitet werden, die neben dem Einsatz für Biogasanlagen, Düngung und Bewässerung auch für andere bisher ungenutzte Verarbeitungsmöglichkeiten zur Wertstoffgewinnung genutzt werden können.

Die Erfindung betrifft ferner ein Sterilfiltratkonzentrat, erhältlich durch das Verfahren nach einem der Ansprüche 12 bis 23.

Weitere Einzelheiten der Erfindung werden anhand der nachstehenden Figuren erläutert. Dabei zeigt:
- Fig. 1: ein Flussdiagramm einer ersten Ausführungsform des erfindungsgemäßen Verfahrens;
- Fig. 2: ein Flussdiagramm einer zweiten Ausführungsform des erfindungsgemäßen Verfahrens;
- Fig. 3: ein Flussdiagram einer dritten Ausführungsform des erfindungsgemäßen Verfahrens.

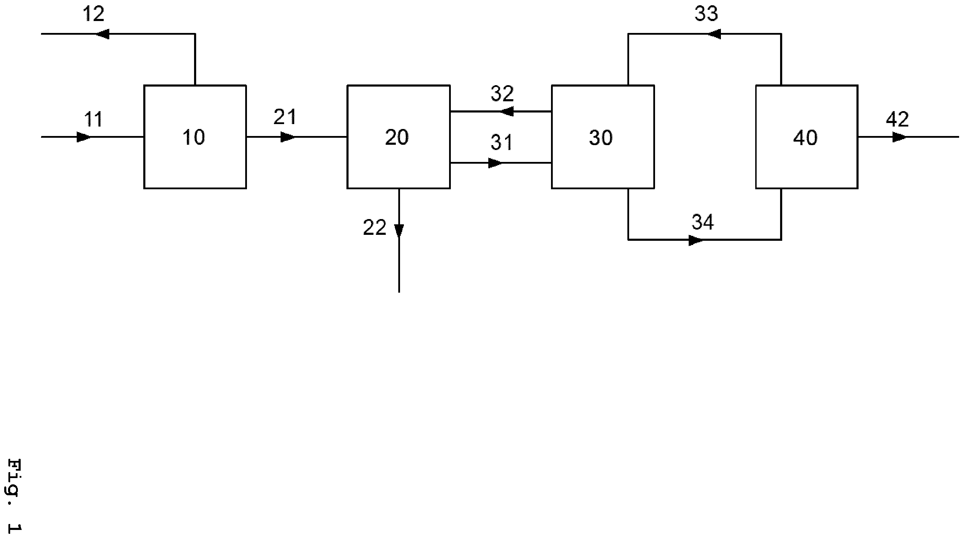

Fig. 1 zeigt eine erste Ausführungsform des erfindungsgemäßen Verfahrens, bestehend aus einer Ultrafiltration als Sterilfiltration 10 mit einer Porenweite < 0,2 µm, in der ein anfallender Stoffstrom aus Rohgülle 11 zu einer von Feststoffen und Mikroorganismen befreiten Gülle-Fraktion, forthin als Sterilfiltrat 21 bezeichnet, und einer aus Feststoffen und Mikroorganismen bestehenden Gülle-Fraktion 12 aufgeteilt wird. Das Sterilfiltrat 21 wird in einen Behälter 20 geführt. Von dort wird ein Teilstrom 31 des Sterilfiltrats 21 durch eine Vorwärtsosmose-Einheit 30 kontinuierlich zu Teilen entwässert. Das teilentwässerte Sterilfiltrat beziehungsweise Vorwärtsosmose-Retentat 32 wird zurück in den Behälter 20 geführt. Mit der Zeit wird das Sterilfiltrat 21 im Behälter 20 entwässert, bis sie die gewünschte Endkonzentration erreicht hat. Das Sterilfiltrat-Konzentrat 22 wird dem Verfahren entnommen und kann als Hochleistungs-Dünger weiterverwendet werden. Das Wasser aus dem Sterilfiltrat 21 wird kontinuierlich durch die Vorwärtsosmose in eine Zuglösung 33 mit einem osmotischen Druck, der höher als der osmotische Druck des Sterilfiltrats 21 ist, überführt. Die Zuglösung 33 wird durch das Wasser verdünnt 34 und durch eine Umkehrosmose-Stufe 40 so entwässert, dass eine Zuglösung 33 mit genügend hohem osmotischen Druck wieder hergestellt wird. Das Wasser beziehungsweise Permeat 42 aus der Zuglösung 33 besitzt eine besonders hohe Reinheit und kann für weitere Zwecke, insbesondere zur landwirtschaftlichen Nutzung, verwendet werden.

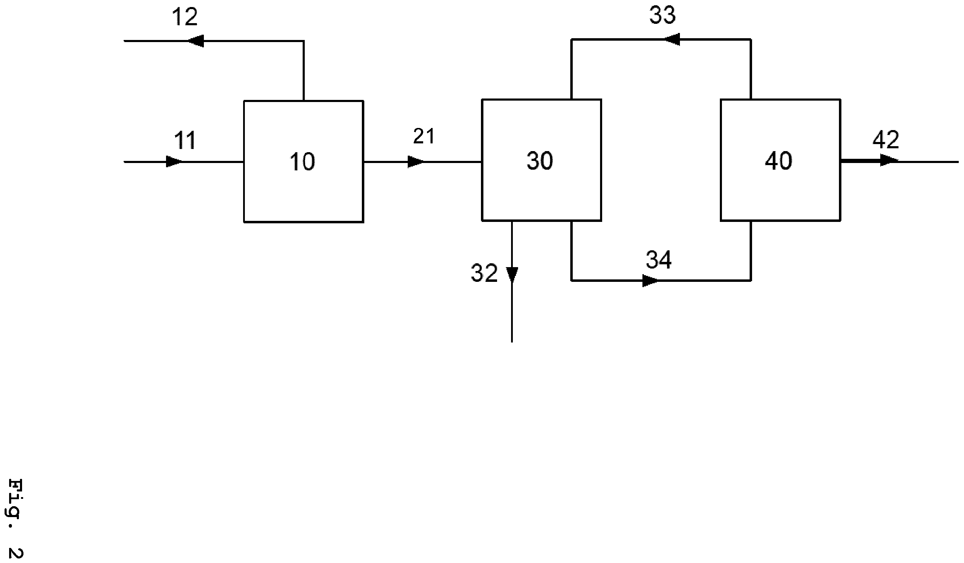

Fig. 2 zeigt eine zweite Ausführungsform des erfindungsgemäßen Verfahrens, bestehend aus einer Ultrafiltration als Sterilfiltration 10 mit einer Porenweite < 0,2 µm, in der ein anfallender Stoffstrom aus Rohgülle 11 zu einer von Feststoffen und Mikroorganismen befreiten Gülle-Fraktion, forthin als Sterilfiltrat 21 bezeichnet, und einer aus Feststoffen und Mikroorganismen bestehenden Gülle-Fraktion 12 aufgeteilt wird. Das Sterilfiltrat 21 wird direkt einer Vorwärtsosmose-Einheit 30 zugeführt. Von dort wird das Sterilfiltrat 21 kontinuierlich zu bis zur gewünschten Endkonzentration entwässert. Das SterilfiltratKonzentrat beziehungsweise Vorwärtsosmose-Retentat 32 wird dem Verfahren entnommen und kann als Hochleistungs-Dünger weiterverwendet werden. Das Wasser aus dem Sterilfiltrat 21 wird kontinuierlich durch die Vorwärtsosmose in eine Zuglösung 33 mit einem osmotischen Druck, der höher als der osmotische Druck des Sterilfiltrats 21 ist, überführt. Die Zuglösung wird durch das Wasser verdünnt 34 und durch eine Umkehrosmose-Stufe 40 so entwässert, dass eine Zuglösung 33 mit genügend hohem osmotischen Druck wieder hergestellt wird. Das Wasser beziehungsweise Permeat 42 aus der Zuglösung 33 besitzt eine besonders hohe Reinheit und kann für weitere Zwecke, insbesondere zur landwirtschaftlichen Nutzung, verwendet werden.

Fig 3. zeigt eine dritte Ausführungsform des erfindungsgemäßen Verfahrens, bestehend aus einer Ultrafiltration als Sterilfiltration 10 mit einer Porenweite < 0,2 µm, in der ein anfallender Stoffstrom aus Rohgülle 11 zu einer von Feststoffen und Mikroorganismen befreiten Gülle-Fraktion, forthin als Sterilfiltrat 21 bezeichnet, und einer aus Feststoffen und Mikroorganismen bestehenden Gülle-Fraktion 12 aufgeteilt wird. Das Sterilfiltrat 21 wird direkt einer Vorwärtsosmose-Einheit 30 zugeführt. Von dort wird das Sterilfiltrat 21 kontinuierlich zu bis zur gewünschten Endkonzentration entwässert. Das Sterilfiltrat-Konzentrat beziehungsweise Vorwärtsosmose-Retentat 32 wird dem Verfahren entnommen und kann als Hochleistungs-Dünger weiterverwendet werden. Das Wasser aus dem Sterilfiltrat 21 wird kontinuierlich durch die Vorwärtsosmose in eine Zuglösung 33 mit einem osmotischen Druck, der höher als der osmotische Druck des Sterilfiltrats 21 ist, überführt. Die Zuglösung wird durch das Wasser verdünnt 34 und durch eine Umkehrosmose-Stufe 40 so entwässert, dass eine Zuglösung 33 mit genügend hohem osmotischen Druck wieder hergestellt wird. Das Wasser beziehungsweise Permeat 42 aus der Zuglösung 33 wird in eine Ionenaustauscher-Einheit 50 geführt, um ein Wasser 51 mit besonders hoher Reinheit zu erzeugen, welches für weitere Zwecke, insbesondere zur landwirtschaftlichen Nutzung, verwendet werden kann. Die von der Ionenaustauscher-Einheit gebunden Komponenten werden durch ein Regeneriermittel 52 von dem Ionenaustauscher-Material gelöst und liegen in hochkonzentrierter Form in dem Regenerat 53 vor. Das Regenerat kann dem Verfahren als Zuglösung zurückgeführt oder als Wertstoffquelle weiterverarbeitet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Sterilfiltrationsstufe
- 11: Rohgülle
- 12: Mikroorgansimen und Feststoffe aufweisende Gülle-Fraktion
- 20: Behälter
- 21: Sterilfiltrat
- 22: Sterilfiltrat-Konzentrat
- 30: Vorwärtsosmose-Stufe
- 31: Teilstrom des Sterilfiltrats
- 32: Vorwärtsosmose-Retentat
- 33: Zuglösung
- 34: mit Wasser verdünnte Zuglösung
- 40: Umkehrosmose-Stufe
- 42: Permeat
- 50: Ionenaustauscher
- 51: Ablauf Ionenaustauscher
- 52: Regeneriermittel
- 53: Regenerat

## Patentansprüche

1. Vorrichtung zur Aufbereitung einer Lösung, welche Wasser, Mikroorganismen und organisches und/oder anorganisches Salz aufweist, mit einer Sterilfiltrationsstufe, welche dazu eingerichtet ist, Mikroorganismen aus einer Lösung abzuscheiden, welche Wasser, die Mikroorganismen und organisches und/oder anorganisches Salz aufweist, und dadurch ein Sterilfiltrat zu erzeugen, und mit einer Vorwärtsosmose-Stufe, welche dazu eingerichtet ist, Wasser aus dem Sterilfiltrat abzuscheiden und dadurch ein Sterilfiltratkonzentrat zu erzeugen.

2. Vorrichtung nach Anspruch 1, welche ferner eine Aufbereitungsstufe, insbesondere eine Umkehrosmose-Stufe, aufweist, welche dazu eingerichtet ist, eine für die Vorwärtsosmose verwendete und im Zuge der Vorwärtsosmose verdünnte Zuglösung mittels zumindest einem druckgetriebenen oder temperaturgetriebenen Membranprozess aufzubereiten.

3. Vorrichtung nach einem der vorangehenden Ansprüche, welche ferner eine zusätzliche Trennstufe, beispielweise eine Nanofiltrationsstufe, aufweist, welche dazu eingerichtet ist, eine weitere Auftrennung des Sterilfiltrats in seine Komponenten zu bewirken.

4. Vorrichtung nach einem der Ansprüche 1 bis 3, wobei die Vorwärtsosmose-Stufe einen umittelbar mit der Sterilfiltrationsstufe oder der zusätzlichen Trennstufe verbundenen Sterilfiltratzulauf und einen Sterilfiltratkonzentratablauf aufweist, so dass das Vorwärtsosmose-Retentat nach einem einmaligen Durchlaufen der Vorwärtsosmose-Stufe aus dem Prozess geführt ist, so dass das Vorwärtsosmose-Retentat dem Sterilfiltratkonzentrat entspricht.

5. Vorrichtung nach einem der vorangehenden Ansprüche, wobei die Sterilfiltrationsstufe eine Porenweite von weniger als 0,4 µm, bevorzugt, weniger als 0,3 µm, besonders bevorzugt weniger als 0,2 µm aufweist.

6. Vorrichtung nach einem der vorangehenden Ansprüche, welche ferner eine Ionenaustauscher-Stufe zur Nachbehandlung des aus dem Sterilfiltrat abgeschiedenen Wassers aufweist, wobei die Ionenaustauscher-Stufe mindestens eine Kationenaustauscher-Einheit oder mindestens eine Anionenaustauscher-Einheit aufweist.

7. Vorrichtung nach Anspruch 12, wobei die Ionenaustauscher-Stufe eine Kombination von mindestens einer Anionenaustauscher-Einheit und mindestens einer Kationenaustauscher-Einheit aufweist.

8. Verfahren zur Aufbereitung einer Lösung, welche Wasser, Mikroorganismen und organisches und/oder anorganisches Salz aufweist, mit den Schritten:
Erzeugen eines Sterilfiltrats aus einer Wasser, Mikroorganismen und organisches und/oder anorganisches Salz aufweisenden Lösung, wobei zur Erzeugung des Sterilfiltrats die Mikroorganismen mittels Sterilfiltration aus der Lösung abgeschieden werden;
Erzeugen eines Sterilfiltratkonzentrats aus dem Sterilfiltrat mittels Vorwärtsosmose,
wobei bei der Vorwärtsosmose Wasser aus der Lösung abgeschieden werden.

9. Verfahren nach Anspruch 8, ferner aufweisend das Aufbereiten einer für die Vorwärtsosmose verwendeten und im Zuge der Vorwärtsosmose verdünnten Zuglösung mittels zumindest einem druckgetriebenen oder temperaturgetriebenen Membranprozess.

10. Verfahren nach Anspruch 8 oder 9, wobei die gelösten Bestandteile in der verdünnten Zuglösung zum Teil oder gänzlich einem System oder Teilsystem der Vorwärtsosmose, beispielsweise dem Sterilfiltrat, entstammen.

11. Verfahren nach einem der vorangehenden Ansprüche, ferner aufweisend das Behandeln des Sterilfiltrats mit einer zusätzlichen Trennstufe, beispielsweise einer Nanofiltration, um eine weitere Auftrennung des Sterilfiltrats in seine Komponenten zu bewirken.

12. Verfahren nach Anspruch 8 bis 11, **dadurch gekennzeichnet, dass** das Vorwärtsosmose-Retentat in einen Behälter zurückgeführt und durch mehrmaliges Durchlaufen der Vorwärtsosmose aufkonzentriert wird.

13. Verfahren nach Anspruch 12, wobei das Sterilfiltrat vor Erreichen der Vorwärtsosmose durch den Behälter geführt wird, in welchem das rückgeführte Vorwärtsosmose-Retentat mit dem Sterilfiltrat gemischt wird.

14. Verfahren nach einem der Ansprüche 8 bis 11, wobei das Vorwärtsosmose-Retentat nach einem einmaligen Durchlaufen der Vorwärtsosmose aus dem Prozess geführt wird, so dass das Vorwärtsosmose-Retentat dem Sterilfiltratkonzentrat entspricht.

15. Sterilfiltratkonzentrat, erhältlich durch das Verfahren nach einem der Ansprüche 16 bis 32.
